# EUROPÄISCHE PATENTSCHRIFT

(11) **EP 3 435 483 B1**
(45) Veröffentlichungstag und Bekanntmachung des Hinweises auf die Patenterteilung: **28.04.2021**
(21) Anmeldenummer: 17183407.0
(22) Anmeldetag: 26.07.2017
(51) Int. Cl.: H01R 4/02, H01R 43/02, B23K 11/02, B23K 11/04, B23K 11/18, B23K 11/20, B23K 103/10, B23K 103/12, B23K 103/18, B23K 101/38, H01R 4/62, H01R 4/72, B23K 11/00

(54) **VERBINDER FÜR EIN HOCHSTROMFÜHRENDES KABEL SOWIE EIN VERFAHREN ZUR HERSTELLUNG EINES SOLCHEN VERBINDERS**
CONNECTOR FOR A HIGH CURRENT CABLE AND METHOD FOR PRODUCING SUCH A CONNECTOR
CONNECTEUR POUR UN CÂBLE HAUTE TENSION ET PROCÉDÉ DE FABRICATION D'UN TEL CONNECTEUR

(43) Veröffentlichungstag der Anmeldung: 30.01.2019
(73) Patentinhaber: Nordex Energy SE & Co. KG, 22419 Hamburg (DE)
(72) Erfinder: ZAPPE, Frank, 44575 Castrop-Rauxel (DE); BRAUCH, Tobias, 18059 Rostock (DE); KREMER, Jochen, 22299 Hamburg (DE); FUSKOVA, Lenka, 25462 Rellingen (DE)
(74) Vertreter: Hauck Patentanwaltspartnerschaft mbB

(56) Entgegenhaltungen:
- EP-A1- 2 131 448
- WO-A1-2007/140489

## Beschreibung

Die vorliegende Erfindung betrifft einen Verbinder für ein hochstromführendes Kabel sowie ein Herstellungsverfahren für einen solchen Verbinder. Der Verbinder ist für Hochstrom vorgesehen und für einen Einsatz in rauen Umgebungen geeignet, in denen der Verbinder mechanischen Belastungen, beispielsweise durch Vibrationen, Wärme und dergleichen, ausgesetzt ist. Bevorzugt wird der Verbinder in Windenergieanlagen eingesetzt, kann aber auch im Schiffbau und hier insbesondere im Marineschiffbau eingesetzt werden.

Hochstrom wird in manchen Industriezweigen auch als Starkstrom bezeichnet, wobei nachfolgend diese Begriffe synonym füreinander verwendet werden. Hochstrom bezeichnet hier Ströme, wie sie in der entsprechenden DIN-Norm beispielsweise für die Messung von Hochströmen definiert sind, wobei der Hochstrom in der Regel eine Stromstärke von mehr als 100 A vorsieht.

Aus DE 2 218 049 ist ein Verfahren zum Ansetzen eines Drahtseilkabels an einen Verbinder bekannt, bei dem das Kabel in das Ende einer hohlzylindrischen Buchse eingeführt wird, bis die Endfläche des Kabels in Flucht mit dem anderen Ende der Buchse zur Bildung einer gemeinsamen ebenen Fläche liegt. Unter Aufbringung einer axialen Belastung werden die Enden der Drahtseilstränge und der Verbinder zusammengepresst, während sie sich in drehender Reibungsberührung befinden, wodurch die Teile bis auf einen plastischen Zustand erwärmt werden und die ebene Fläche der Buchse und des Kabels an dem Verbinder durch Reibung angeschweißt werden.

Aus EP 1 032 077 B2 ist eine Verbindung eines elektrischen, aus mehreren Aluminiumdrähten oder Litzen gebildeten und isolierten Aluminiumkabels mit einem aus Kupfer, einer Kupferlegierung und/oder aus Messing bestehenden Anschlussteil bekannt geworden. Es ist eine Stützhülse vorgesehen, die zumindest den der endseitigen Stirnseite des abisolierten Teils des Aluminiumkabels umschließt und mit den Ende des Aluminiumkabels verpresst ist, wobei das Anschlussteil mit der aus den einzelnen Drähten gebildeten Stirnseite das Ende des Aluminiumkabels verschweißt ist.

Aus EP 2 697 866 B1 ist eine Verbindung eines elektrischen, aus mehreren Drähten oder Litzen gebildeten Kabels mit einem Anschlussteil bekannt geworden. Eine Stützhülse nimmt eine endseitige Stirnseite des Kabels auf, so dass die Drähte oder Litzen in der Stützhülse gehalten sind. Die aus den einzelnen Drähten oder Litzen gebildete Stirnseite des Kabels wird mit dem Anschlussteil mit seiner stirnseitigen Schweißnaht verschweißt, wobei das Anschlussteil auf der der Schweißnaht gegenüber liegenden Seite hohl ist. Das Anschlussteil ist rohrförmig mit einem Boden ausgebildet, wobei der Boden einstückig aus den Wänden des Anschlussteils geformt ist und entlang der Schweißnaht mit dem Kabel verschweißt ist.

Aus DE 11 2012 004 009 T5 ist ein Verfahren zum Verbinden eines einadrigen elektrischen Kabels mit elektrischem Litzendraht durch einen röhrenförmigen Verbindungsanschluss bekannt geworden.

Aus EP 2 131 448 A1 ist ein Verfahren zum Verbinden eines elektrisch leitenden Bauteils mit einem flexiblen elektrischen Leiter bekannt geworden. Der Leiter besteht aus Drähten oder Litzen einer Aluminiumlegierung, das endseitig in eine metallische Stützhülse eingefasst ist. Stirnseitig auf das Leiterende ist ein Kontaktelement beispielsweise durch eine Widerstands schweißung aufgebracht. Das Kontaktelement wird mit einem rohrförmigen Anschlusselement in eine zugfeste Verbindung gebracht.

Aus WO 2007/140489 A1 ist ein Verfahren zum Verbinden von zwei elektrisch leitenden Bauteilen bekannt geworden. Hierzu sind eine elektrische Leitung und ein Anschlusselement vorgesehen auf der eine Hülse verpresst ist. Ein Adapterteil ist hier nicht vorgesehen.

Der Erfindung liegt die Aufgabe zugrunde, einen Verbinder sowie ein Verfahren zur Herstellung eines Verbinders bereitzustellen, der bzw. das die Montagezeit verkürzt und eine Verletzung von Einzeldrähten vermeidet.

Erfindungsgemäß wird die Aufgabe durch einen Verbinder mit den Merkmalen nach Anspruch 1 gelöst. Auch das Verfahren mit den Verfahrensschritten gemäß Anspruch 12 löst die der Erfindung zugrundeliegende Aufgabe.

Der erfindungsgemäße Verbinder ist für ein hochstromführendes Kabel vorgesehen. Der Verbinder besitzt einen Verbinderkopf mit einem Anschlussabschnitt für einen elektrischen Anschluss und einem Verbindungsabschnitt für die Verbindung mit einem Adapterstück. Der Anschlussabschnitt ist beispielsweise vorgesehen zur mechanischen Anbringung des Verbinders an einem elektrischen Anschluss beispielsweise für einen Generator, Umrichter, Transformator oder dergleichen. Das Adapterstück ist zwischen das Anschlussstück und ein hochstromführendes Kabel geschaltet. Erfindungsgemäß weist das Adapterstück einen Kabelabschnitt und eine den Kabelabschnitt umfassende Hülse auf. Das Material des Kabelabschnitts ist von dem Material des Kabels verschieden. Beispielsweise kann das Kabel aus Aluminium oder Aluminiumlegierungen bestehen, während das Material des Kabelabschnitts beispielsweise aus Kupfer oder einer Kupferlegierung besteht. Erfindungsgemäß ist das Adapterstück über Widerstandschweißen mit dem Kabel und dem Verbindungsabschnitt an ihren Anschlussflächen verbunden. Zu dem Widerstandsstumpfschweißen zählen hierbei sowohl ein Pressstumpfschweißen, wie auch das Abbrennstumpfschweißen. Bei dem erfindungsgemäßen Verbinder ist durch die Verwendung eines Adapterstücks eine zuverlässige und ohne großen Aufwand herzustellende Verbindung zwischen dem Verbinderkopf und dem Kabel herzustellen. Das Adapterstück ist bevorzugt volumenartig mit dem Kabel und dem Verbindungsabschnitt über die mittels Widerstandsstumpfschweißen hergestellten Verbindungen verbunden.

In einer bevorzugten Ausgestaltung bestehen Kabelabschnitt und/oder Hülse des Adapterstücks aus dem gleichen Material wie der Verbinderkopf. In der Regel ist für den Verbinderkopf Kupfer vorgesehen. Es ist auch möglich, Kupferlegierungen wie zum Beispiel Messing als Material für den Verbinderkopf und das Adapterstück vorzusehen.

In einer weiter bevorzugten Ausgestaltung ist der Kabelabschnitt und/oder die Hülse des Adapterstücks nicht aus dem gleichen Material hergestellt wie das Kabel. Aus Kostengründen wird das hochstromführende Kabel häufig aus Aluminium oder einer Aluminiumlegierung hergestellt. Durch Dazwischenschalten des Adapterstücks, das aus Kupfer oder einer Kupferlegierung wie beispielsweise Messing bestehen kann, wird insgesamt eine elektrisch gut leitende Verbindung zwischen dem Verbinderkopf und seinem Anschlussabschnitt und dem Kabel hergestellt.

Das Kabel besitzt bevorzugt einen ein- oder mehrdrähtigen Leiteraufbau, der isoliert ist. Das hochstromführende Kabel kann insbesondere aus der Leiterklasse 1 bis 3, bevorzugt aus der Leiterklasse 2 stammen.

Gemäß der Erfindung besitzt der Kabelabschnitt des Adapterstücks feindrähtige Litzenleiter, die insbesondere der Leiterklasse 2 bis 6, bevorzugt der Leiterklasse 5 entsprechen. Mit der Verwendung des Adapterstücks und seinem feindrähtigen Litzenleiter ist es möglich, durch Widerstandsstumpfschweißen eine elektrisch gut leitende Verbindung mit dem Verbinderkopf einerseits und dem bevorzugt ein- oder mehrdrähtigen Leiter des Kabels andererseits herzustellen. Der feindrähtige Litzenleiter erlaubt eine sichere und feste Verbindung durch ein Eindiffundieren der Schmelze in den Leiterkern, so dass eine Volumenverbindung ausgebildet wird, die sowohl mechanischen Belastungen widerstehen kann, als auch einen ausgezeichneten und beständigen elektrischen Kontakt herstellt.

Bevorzugt besteht der Verbinderkopf aus Kupfer oder einer Kupferlegierung und ist zweckmäßigerweise massiv ausgebildet. Auch das Adapterstück mit Kabelabschnitt und Hülse besteht bevorzugt aus Kupfer. Das hochstromführende Kabel weist einen Aluminiumleiter auf. In einer zweckmäßigen Ausgestaltung ist der Anschlussabschnitt mit einer Kontaktfläche versehen und trägt mindestens eine Durchgangsbohrung. Über die Durchgangsbohrung kann der Anschlussabschnitt mit einem Anschluss an einem Umrichter, Generator oder einer anderen elektrischen Einrichtung hergestellt werden. Der Verbindungsabschnitt des Verbinderkopfes weist bevorzugt eine zylindrische Form auf, die in ihrem Durchmesser den Durchmesser des Adapterstücks und auch des hochstromführende Kabels aufweist.

Die erfindungsgemäße Aufgabe wird ebenfalls durch ein Verfahren zur Herstellung eines Verbinders gelöst. Der Verbinder besitzt einen Verbinderkopf mit einem Anschlussabschnitt für einen herzustellenden elektrischen Anschluss und einen Verbindungabschnitt für eine Verbindung mit einem hochstromführenden Kabel, wobei das Adapterstück einen Kabelabschnitt und eine den Kabelabschnitt umfassende Hülse aufweist. Das Material des Kabelabschnitts ist dabei von dem Material des hochstromführenden Kabels verschieden. Bei dem erfindungsgemäßen Verfahren wird in einem ersten Verfahrensschritt die Hülse in eine gewölbte Form vorgebogen. Anschließend wird der Kabelabschnitt in die vorgebogene Form eingelegt. Die Hülse mit eingelegtem Kabelabschnitt wird mittels einer Presseinrichtung um den Kabelabschnitt geschlossen, wobei die Hülse den Kabelabschnitt umfasst. Anschließend werden ein oder beiden überstehenden Enden des Kabelabschnitts auf die Länge der Hülse gekürzt. Das so hergestellte Adapterstück wird mittels Widerstandsstumpfschweißen mit dem Verbinderkopf und hier seinem Verbindungsabschnitt und dem Kabel verbunden. Das vorstehende Verfahren erlaubt die Herstellung des Adapterstücks ohne eine Beschädigung von einzelnen Drahtlitzen. Der besondere Vorteil des Verfahrens besteht darin, dass hier ein vereinfachter Prozess für das Aufbringen der Hülse auf einen elektrischen Leiter angegeben wird. Die Verwendung einer Hülse, wie die erfindungsgemäß vorgesehene Hülse des Adapterstücks, ist bei einem Schweißvorgang bekannt, um das Aufspleißen des Leiters zu vermeiden und die benötigte Steifigkeit für den Schweißprozess zu gewährleisten. Bei herkömmlichen Verfahren wird ein vorgefertigtes Röhrchen auf den Leiter aufgeschoben, was viel Zeit in Anspruch nimmt und die Gefahr birgt, dass einzelne Drähte abknicken oder sich verschieben. Durch die Herstellung des Adapterstücks können diese Probleme vermieden werden und das Kabel über Widerstandsstumpfschweißen mit dem Adapterstück verbunden werden.

In einer bevorzugten Weiterbildung des Verfahrens ist der Kabelabschnitt vor seinem Einkürzen an seinen beiden Enden mit einem Kabelbinder oder einem Kabelmantel versehen, um ein endseitiges Aufspleißen zu vermeiden. Nach dem Einkürzen des Kabelabschnitts auf die Länge der Hülse entfällt die Notwendigkeit für einen Kabelbinder oder einen Kabelmantel.

Nach fertiggestellter Verbindung erfolgt eine Isolierung für das Kabel und das Adapterstück. Die Isolierung wird in Form eines Schrumpfschlauchs aufgeschrumpft. Hierbei kann es sich um einen Kaltschrumpfschlauch oder einen Warmschrumpfschlauch handeln. In der Regel wird der Verbindungsabschnitt des Verbinderkopfes mitisoliert.

In einer weiter bevorzugten Ausgestaltung besitzt die Isolierung eine gut sichtbare Markierung. Bevorzugt wird die Markierung vor dem Aufbringen der Isolierung an dem Anschlussabschnitt des Verbinderkopfes ausgerichtet. Hierdurch kann anhand der Markierung die Orientierung des Verbinderkopfes gut sichtbar dargestellt werden.

Die Erfindung wird nachfolgend anhand eines Ausführungsbeispiels näher erläutert. Es zeigen:
- Fig. 1: eine schematische Ansicht einer Windenergieanlage mit einem im Turm entlang geführten Kabel,
- Fig. 2: die Herstellung des Adapterstücks und
- Fig. 3: den fertigen Aufbau des mit dem Kabel verbundenen Verbinders.

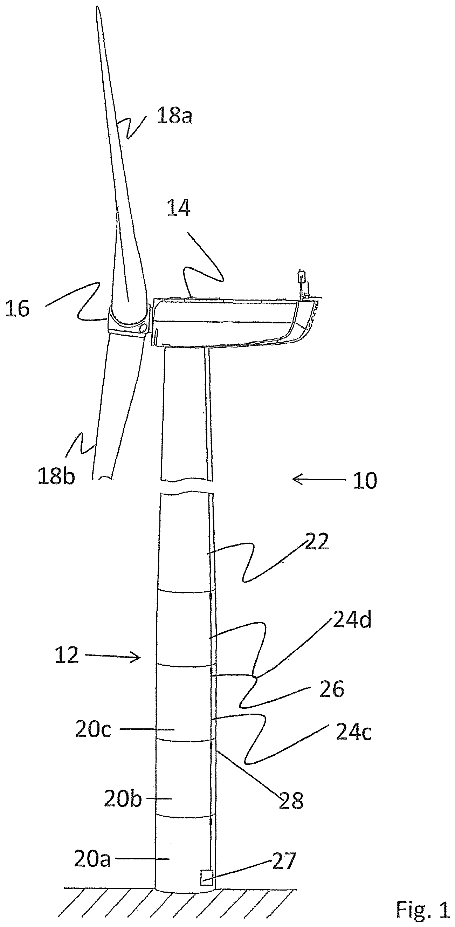

Fig. 1 zeigt eine Windenergieanlage 10 mit einem Turm 12, einem Maschinenhaus 14 und einem Rotor 16. Der Rotor 16 besitzt drei Rotorblätter, von denen in der Ansicht von der Seite die Rotorblätter 18a, 18b zu erkennen sind, wobei das Rotorblatt 18b zur besseren Übersicht in der Figur geschnitten dargestellt ist.

Der Turm 12 besteht zumindest in einem unteren Abschnitt aus einer Mehrzahl von Turmsektionen 20a, 20b, 20c. Im Inneren des Turms führt eine elektrische Leitung 22, die einen im Maschinenhaus 14 angeordneten Generator und Umrichter mit einer elektrischen Einrichtung 27 im Fuß des Turmes verbindet. Die elektrische Leitung ist sowohl an ihrem Ende im Maschinenhaus 14 als auch an ihrem unteren Ende im Turmfuß an der elektrischen Einrichtung über einen Verbinder mit einem entsprechenden elektrischen Anschluss verbunden.

Aufgrund der einzelnen Turmsektionen 20a, 20b, 20c ist auch die elektrische Leitung 22 in Leitungsabschnitte 24c, 24d unterteilt. Die Leitungsabschnitte sind sowohl an ihrem oberen Ende 26 als auch an ihrem unteren Ende 28 über einen Kabelverbinder elektrisch leitend miteinander verbunden. Der erfindungsgemäße Verbinder ist primär für eine Verbindung mit elektrischen Anschlüssen von im Maschinenhaus angeordneten elektrischen Einheiten wie Generator oder Umrichter vorgesehen, kann aber auch als ein solcher Kabelverbinder eingesetzt werden, wenn beispielsweise ein Kabelabschnitt aus Kupfer mit einem Kabelabschnitt aus Aluminium verbunden werden soll.

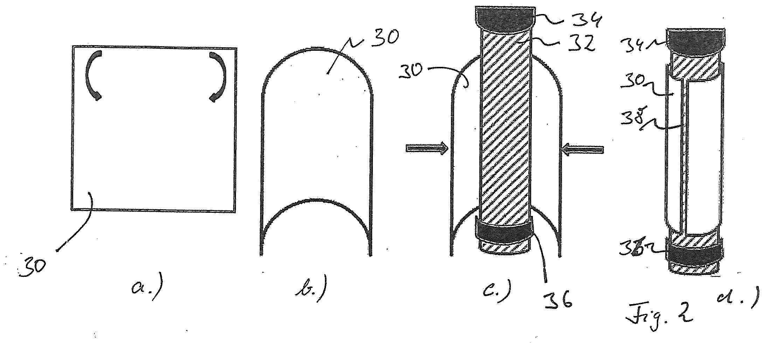

Fign. 2 a bis d zeigen in einer schematischen Ansicht die Herstellungsschritte für die Herstellung des Adapterstücks. Zur Herstellung des Adapterstücks wird eine zunächst ebene Hülse aus Kupferblech, das auch aus einer Kupferlegierung bestehen könnte, aus seiner ebenen Form vorgebogen. Die Hülse 30 besitzt in ihrem noch nicht gebogenen Zustand eine annähernd quadratische Form und wird an zwei gegenüberliegenden Seiten gebogen. Fig. 2b zeigt eine ungefähr halbkreisförmig vorgebogene Form. In Fig. 2c wird ein Kabelabschnitt 32 in das vorgebogene Kupferblech eingelegt. Der Kabelabschnitt 32 besitzt an seinen Enden Kabelbinder 34 oder 36, die ein Aufspleißen des Kabelabschnitts 32 verhindern. Über einen Presseinrichtung, die die Presskräfte P1 und P2 auf die vorgeformte Hülse 30 ausüben, wird diese im Wesentlichen vollständig um den Kabelabschnitt 32 geschlossen. Die Hülse 30 darf in ihrem verpressten Zustand noch einen Schlitz 38 besitze. Die Abmessungen des Schlitzes 38 sind dadurch begrenzt, dass die Hülse in ihrem Umfang so gewählt wird, dass bei einem Widerstandsstumpfschweißen kein Aufspleißen oder Aufweiten des Kabelabschnitts auftreten kann.

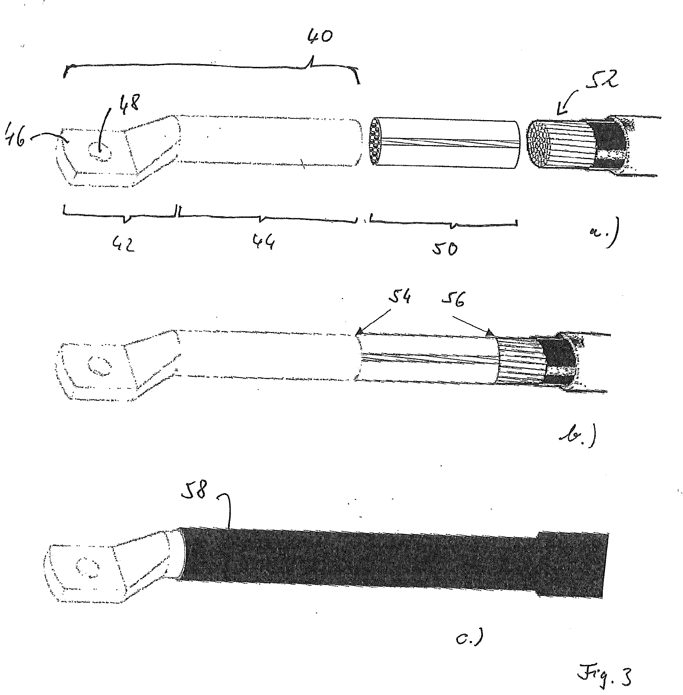

Das so hergestellte Adapterstück wird nachfolgend, wie in Fig. 3 dargestellt, mit einem Verbinderkopf 40 weiterverarbeitet. Der Verbinderkopf 40 besitzt einen Anschlussabschnitt 42 und einen Verbindungsabschnitt 44. Der Anschlussabschnitt 42 ist gekröpft gegenüber dem zylindrisch ausgebildeten Verbindungsabschnitt. Der Anschlussabschnitt besitzt eine ebene Kontaktfläche 46 mit einer Durchgangsbohrung 48. Die Kontaktfläche 46 wird auf einen elektrischen Anschluss mit dem eine elektrische Verbindung herzustellen ist, aufgelegt und dort befestigt.

Das Adapterstück 50 ist in Fig. 3a in seiner eingekürzten Form dargestellt, bei der der Kabelabschnitt bündig mit der Hülse abschließt. Ein Kabel 52 ist an einem Ende abisoliert, so dass sein mehrdrahtiger Leiteraufbau hier freiliegt.

Der Verbinder besteht bevorzugt aus Kupfer und ist als massiver Körper ausgeführt. Das Adapterstück besteht mit Kabelabschnitt und Hülse ebenfalls aus Kupfer. Der Kabelabschnitt besteht dabei aus feindrähtigen Litzenleitern, bevorzugt der Leiterklasse 5. Das Kabel 52 besteht aus Aluminiumleitern und besitzt einen mehrdrähtigen Leiteraufbau. Wichtig hierbei ist, dass der grobe Aufbau der Leiterklasse 2 mit dem Aluminiumleiter nicht direkt auf das massive Verbindungsstück geschweißt wird, sondern hier ein feindrähtiger Litzenleiter aus Kupfer dazwischen gesetzt ist, der in den Anschlussflächen 54, 56 eine gute Verbindung mit dem Aluminiumleiter und dem massiven Verbindungsstück eingehen kann. Der feindrähtige Litzenleiter erlaubt eine sichere und feste Verbindung durch ein Eindiffundieren der Schmelze in den Leiterkern, so dass eine Volumenverbindung ausgebildet wird, die sowohl mechanischen Belastungen widerstehen kann, als auch einen ausgezeichneten und beständigen elektrischen Kontakt herstellt.

Wie in Fig. 3c dargestellt, wird abschließend der blank liegende Teil der Verbindung durch einen Schrumpfschlauch 58 isoliert.

### Bezugszeichenliste

- 10: Windenergieanlage
- 12: Turm
- 14: Maschinenhaus
- 16: Rotor
- 18a: Rotorblatt
- 18b: Rotorblatt
- 20a: Turmsektion
- 20b: Turmsektion
- 20c: Turmsektion
- 22: elektrische Leitung
- 24c: Leitungsabschnitt
- 24d: Leitungsabschnitt
- 26: oberes Ende der Leitungsabschnitte
- 27: elektrische Einrichtung
- 28: unteres Ende der Leitungsabschnitte
- 30: Hülse aus Kupferblech
- 32: Kabelabschnitt
- 34: Kabelbinder
- 36: Kabelbinder
- 38: Schlitz
- 40: Verbinderkopf
- 42: Anschlussabschnitt
- 44: Verbindungabschnitt
- 46: Kontaktfläche
- 48: Durchgangsbohrung
- 50: Adapterstück
- 52: Kabel
- 54: Anschlussfläche
- 56: Anschlussfläche
- 58: Schrumpfschlauch

## Patentansprüche

1. Verbinder für ein Hochstrom führendes Kabel (52), der einen Verbinderkopf (40) mit einem Anschlussabschnitt (42) für einen elektrischen Anschluss, einen Verbindungsabschnitt (44) und ein Adapterstück (50) aufweist, wobei
a. das Adapterstück (50) über mittels Widerstandsstumpfschweißen hergestellte Verbindungen mit dem Kabel (52) und dem Verbindungsabschnitt (44) verbunden ist,
b. das Adapterstück (50) einen Kabelabschnitt (32) mit einem feindrähtigen Litzenleiter und eine den Kabelabschnitt (32) umfassende Hülse (30) aufweist, und
c. das Material des Kabelabschnitts (32) von dem Material des Kabels (52) verschieden ist.

2. Verbinder nach Anspruch 1, **dadurch gekennzeichnet, dass** der Kabelabschnitt (52) und/oder die Hülse (30) des Adapterstücks (50) aus dem gleichen Material bestehen wie der Verbinderkopf (40).

3. Verbinder nach Anspruch 1 oder 2, **dadurch gekennzeichnet, dass** der Kabelabschnitt (32) und/oder die Hülse (30) des Adapterstücks (50) nicht aus dem gleichen Material bestehen wie das Kabel (52).

4. Verbinder nach einem der Ansprüche 1 bis 3, **dadurch gekennzeichnet, dass** das Kabel (52) einen ein- oder mehrdrähtigen Leiteraufbau besitzt, insbesondere nach einer der Leiterklassen 1 bis 3.

5. Verbinder nach einem der Ansprüche 1 bis 4, **dadurch gekennzeichnet, dass** der Kabelabschnitt (32) feindrähtige Litzenleiter der Leiterklasse 4 bis 6 aufweist.

6. Verbinder nach einem der Ansprüche 1 bis 5, **dadurch gekennzeichnet, dass** der Verbinderkopf (40) aus Kupfer besteht.

7. Verbinder nach Anspruch 6 **dadurch gekennzeichnet, dass** der Verbinderkopf (40) massiv aus Kupfer besteht.

8. Verbinder nach einem der Ansprüche 1 bis 7, **dadurch gekennzeichnet, dass** das Adapterstück (50) mit Kabelabschnitt (32) und Hülse (30) aus Kupfer besteht.

9. Verbinder nach einem der Ansprüche 1 bis 8, **dadurch gekennzeichnet, dass** das Kabel (52) einen Aluminiumleiter aufweist.

10. Verbinder nach einem der Ansprüche 1 bis 9, **dadurch gekennzeichnet, dass** der Anschlussabschnitt (42) eine Kontaktfläche mit mindestens einer Durchgangsbohrung aufweist.

11. Verbinder nach einem der Ansprüche 1 bis 10, **dadurch gekennzeichnet, dass** der Verbindungsabschnitt (44) eine zylindrische Form aufweist.

12. Verfahren zur Herstellung eines Verbinders, der einen Verbinderkopf mit einem Anschlussabschnitt (42) für einen elektrischen Anschluss und einen Verbindungsabschnitt (44) für eine Verbindung mit einem Hochstrom führenden Kabel (52) aufweist, wobei ein Adapterstück (50) einen Kabelabschnitt (32) mit einem feindrähtigen Litzenleiter und eine den Kabelabschnitt (32) umfassende Hülse (30) aufweist, wobei das Material des Kabelabschnitts (32) von dem Material des Kabels (52) verschieden ist, mit folgenden Verfahrensschritten:
a. die Hülse (30) wird in eine gewölbte Form vorgebogen,
b. der Kabelabschnitt (32) wird in die vorgebogene Form eingelegt,
c. die Hülse (30) wird mittels einer Presseinrichtung um den Kabelabschnitt (32) geschlossen, wobei die Hülse (30) den Kabelabschnitt (32) umfasst,
d. eine oder zwei überstehende Enden des Kabelabschnitts (32) werden auf die Länge der Hülse (30) gekürzt und
e. das Adapterstück (50) wird mittels Widerstandsstumpfschweißen mit dem Verbinderkopf (40) und dem Kabel (52) verbunden.

13. Verfahren nach Anspruch 12, **dadurch gekennzeichnet, dass** der Kabelabschnitt (32) vor seinem Einkürzen an seinen beiden Enden einen Kabelbinder (34, 36) oder einen Kabelmantel aufweist, um ein Aufspleißen zu vermeiden.

14. Verfahren nach Anspruch 12 oder 13, **dadurch gekennzeichnet, dass** eine Isolierung auf das Kabel (52) und das Adapterstück (50) aufgebracht wird.

15. Verfahren nach Anspruch 14, **dadurch gekennzeichnet, dass** die Isolierung in Form eines Schrumpfschlauchs (58) aufgeschrumpft wird.

16. Verfahren nach einem der Ansprüche 12 bis 15, **dadurch gekennzeichnet, dass** die Isolierung eine Markierung trägt und vor ihrem Aufbringen an dem Anschlussabschnitt des Verbinderkopfes (40) ausgerichtet wird.

## Claims

1. A connector for a high-current cable (52), which connector comprises a connector head (40) having a terminal portion (42) for an electrical terminal, comprises a connection portion (44), and comprises an adapter piece (50), wherein
a. the adapter piece (50) is connected to the cable (52) and the connection portion (44) via connections produced by means of resistance butt welding,
b. the adapter piece (50) comprises a cable portion (32) having a fine-wire bunched conductor and comprises a sleeve (30) surrounding the cable portion (32), and
c. the material of the cable portion (32) is different from the material of the cable (52).

2. The connector according to claim 1, **characterized in that** the cable portion (52) and/or the sleeve (30) of the adapter piece (50) consist of the same material as the connector head (40).

3. The connector according to claim 1 or 2, **characterized in that** the cable portion (32) and/or the sleeve (30) of the adapter piece (50) do not consist of the same material as the cable (52).

4. The connector according to any one of claims 1 to 3, **characterized in that** the cable (52) has a single- or multi-wire conductor structure, in particular according to any one of conductor classes 1 to 3.

5. The connector according to any one of claims 1 to 4, **characterized in that** the cable portion (32) comprises fine-wire bunched conductors of conductor class 4 to 6.

6. The connector according to any one of claims 1 to 5, **characterized in that** the connector head (40) consists of copper.

7. The connector according to claim 6, **characterized in that** the connector head (40) consists of solid copper.

8. The connector according to any one of claims 1 to 7, **characterized in that** the adapter piece (50) comprising the cable portion (32) and sleeve (30) consists of copper.

9. The connector according to any one of claims 1 to 8, **characterized in that** the cable (52) comprises an aluminium conductor.

10. The connector according to any one of claims 1 to 9, **characterized in that** the terminal portion (42) comprises a contact surface having at least one through-hole.

11. The connector according to any one of claims 1 to 10, **characterized in that** the connection portion (44) has a cylindrical shape.

12. A method for producing a connector comprising a connector head having a terminal portion (42) for an electrical terminal and comprising a connection portion (44) for a connection to a high-current cable (52), wherein an adapter piece (50) comprises a cable portion (32) having a fine-wire bunched conductor and comprises a sleeve (30) surrounding the cable portion (32), wherein the material of the cable portion (32) is different from the material of the cable (52), said method comprising the following steps:
a. the sleeve (30) is pre-bent into a curved shape,
b. the cable portion (32) is inserted into the pre-bent shape,
c. the sleeve (30) is closed around the cable portion (32) by means of a pressing apparatus, wherein the sleeve (30) surrounds the cable portion (32),
d. one or two protruding ends of the cable portion (32) are shortened to the length of the sleeve (30), and
e. the adapter piece (50) is connected to the connector head (40) and to the cable (52) by means of resistance butt welding.

13. The method according to claim 12, **characterized in that** the cable portion (32) comprises a cable tie (34, 36) or a cable sheath on both ends before being shortened in order to prevent splaying.

14. The method according to claim 12 or 13, **characterized in that** insulation is applied to the cable (52) and to the adapter piece (50).

15. The method according to claim 14, **characterized in that** the insulation is shrunk on in the form of a heat-shrink tube (58).

16. The method according to any one of claims 12 to 15, **characterized in that** the insulation bears a marking and is oriented before being applied to the terminal portion of the connector head (40).

## Revendications

1. Connecteur pour un câble à courant élevé (52), présentant une tête de connecteur (40) avec une section de raccordement (42) pour un raccordement électrique, une section de connexion (44) et un adaptateur (50), dans lequel
a. l'adaptateur (50) est relié au câble (52) et à la section de connexion (44) par le biais de connexions réalisées par soudage en bout par résistance,
b. l'adaptateur (50) présente une section de câble (32) avec un conducteur torsadé à fils fins et une douille (30) enrobant la section de câble (32), et
c. le matériau de la section de câble (32) est différent du matériau du câble (52).

2. Connecteur selon la revendication 1, **caractérisé en ce que** la section de câble (52) et/ou la douille (30) de l'adaptateur (50) sont constituées du même matériau que la tête de connecteur (40).

3. Connecteur selon la revendication 1 ou 2, **caractérisé en ce que** la section de câble (32) et/ou la douille (30) de l'adaptateur (50) ne sont pas constituées du même matériau que le câble (52).

4. Connecteur selon l'une des revendications 1 à 3, **caractérisé en ce que** le câble (52) possède une structure de conducteur à un ou plusieurs fils, en particulier conforme à l'une des classes de conducteurs 1 à 3.

5. Connecteur selon l'une des revendications 1 à 4, **caractérisé en ce que** la section de câble (32) présente des conducteurs torsadés à fils fins de la classe de conducteurs 4 à 6.

6. Connecteur selon l'une des revendications 1 à 5, **caractérisé en ce que** la tête de connecteur (40) est constituée de cuivre.

7. Connecteur selon la revendication 6, **caractérisé en ce que** la tête de connecteur (40) est constituée de cuivre de façon massive.

8. Connecteur selon l'une des revendications 1 à 7, **caractérisé en ce que** l'adaptateur (50) avec la section de câble (32) et la douille (30) est constitué de cuivre.

9. Connecteur selon l'une des revendications 1 à 8, **caractérisé en ce que** le câble (52) présente un conducteur en aluminium.

10. Connecteur selon l'une des revendications 1 à 9, **caractérisé en ce que** la section de raccordement (42) présente une surface de contact avec au moins un alésage de passage.

11. Connecteur selon l'une des revendications 1 à 10, **caractérisé en ce que** la section de connexion (44) présente une forme cylindrique.

12. Procédé de fabrication d'un connecteur présentant une tête de connecteur avec une section de raccordement (42) pour un raccordement électrique et une section de connexion (44) pour une connexion à un câble à courant élevé (52), dans lequel un adaptateur (50) présente une section de câble (32) avec un conducteur torsadé à fils fins et une douille (30) enrobant la section de câble (32), dans lequel le matériau de la section de câble (32) est différent du matériau du câble (52), comprenant les étapes de procédé suivantes :
a. la douille (30) est préalablement cintrée en une forme courbe,
b. la section de câble (32) est insérée dans la forme préalablement cintrée,
c. la douille (30) est fermée autour de la section de câble (32) au moyen d'un dispositif de pressage, la douille (30) enrobant la section de câble (32),
d. une ou deux extrémités en saillie de la section de câble (32) sont raccourcies à la longueur de la douille (30) et
e. l'adaptateur (50) est relié à la tête de connecteur (40) et au câble (52) par soudage en bout par résistance.

13. Procédé selon la revendication 12, **caractérisé en ce que** la section de câble (32) présente un serre-câble (34, 36) ou une gaine de câble en amont de son raccourcissement à ses deux extrémités, afin d'éviter une suppression de torsion.

14. Procédé selon la revendication 12 ou 13, **caractérisé en ce qu'**une isolation est appliquée sur le câble (52) et l'adaptateur (50).

15. Procédé selon la revendication 14, **caractérisé en ce que** l'isolation est frettée sous la forme d'un manchon rétractable (58).

16. Procédé selon l'une des revendications 12 à 15, **caractérisé en ce que** l'isolation porte un marquage et est orientée avant son application sur la section de raccordement de la tête de connecteur (40).
